(19) Europäisches Patentamt

European Patent Office

Office européen des brevets

(11) Veröffentlichungsnummer: **0 256 384**
**B1**

(12) **EUROPÄISCHE PATENTSCHRIFT**

(45) Veröffentlichungstag der Patentschrift: **03.10.90**

(21) Anmeldenummer: **87111026.8**

(22) Anmeldetag: **30.07.87**

(51) Int. Cl.⁵: **B 65 D 43/22**

(54) **Klemmverschluss.**

(30) Priorität: **09.08.86 DE 3627016**

(43) Veröffentlichungstag der Anmeldung:
**24.02.88 Patentblatt 88/08**

(45) Bekanntmachung des Hinweises auf die
Patenterteilung:
**03.10.90 Patentblatt 90/40**

(84) Benannte Vertragsstaaten:
**DE FR GB IT**

(56) Entgegenhaltungen:
**FR-A- 568 860**
**FR-A- 659 316**
**FR-A-2 260 510**
**GB-A-1 078 974**
**US-A-1 702 606**

(73) Patentinhaber: **Schmale GmbH. & Co. KG.**
**Schützenstrasse 14**
**D-5880 Lüdenscheid (DE)**

⑦② Der Erfinder hat auf seine Nennung verzichtet

(74) Vertreter: **Dörner, Lothar, Dipl.-Ing.**
**Stresemannstrasse 15**
**D-5800 Hagen 1 (DE)**

Courier Press, Leamington Spa, England.

**Beschreibung**

Die Erfindung bezieht sich auf einen Klemmverschluß für einen kastenförmigen Behälter, der einen Kastenteil und einen schwenkbar an dem Kastenteil befestigten Deckel aufweist, mit einem Befestigungsteil, der aus einer einen Teil des Randes des Deckels umfassenden Klammer gebildet ist, und mit einem bei geschlossenem Deckel an einem Teil des Randes des Kastenteils anliegenden Klemmteil, der mindestens einen Schenkel aufweist, der im Anschluß an seinen ebenen Schenkel als Fangteil ausgebildet ist.

Ein solcher Klemmverschluß ist aus FR—A—2 260 510 bekannt. Bei dem bekannten Klemmverschluß ist der Klemmteil dadurch gebildet, daß die Schenkel der Klammer im mittleren Bereich ausgespart sind und jeder ausgesparte Teil zu einem der Schenkel des Klemmteils abgewinkelt ist. Der Verbindungsteil der Schenkel ist nach Art einer Öse aufgeweitet, von der die Schenkel zunächst parallel zueinander abstreben, um an den freien Enden nach außen zu dem Fangteil gebogen zu sein. Bei dem bekannten Klemmverschluß ist auch die den Befestigungsteil bildende Klammer im Verbindungsteil der Schenkel nach Art einer Öse aufgeweitet, von der die Schenkel V-förmig abstreben. Diese Ausführung begünstigt zwar das Aufstecken auf den Deckel; die — wesentliche — reibschlüssige Verbindung mit dem Deckel ist aber ungenügend.

Hier will die Erfindung Abhilfe schaffen. Die Erfindung, wie sie in den Ansprüchen gekennzeichnet ist, löst die Aufgabe, einen Klemmverschluß zu schaffen, bei dem nicht nur der Klemmteil und der Befestigungsteil vereinfacht ausgebildet und leicht steckbar sind, sondern auch der Befestigungsteil nach dem Aufstecken sicher hält.

Mit der Klammer wird der Befestigungsteil und damit der Klemmverschluß einfach auf den Deckel gesteckt. Die Schenkel der Klammer sind so ausgebildet und weisen eine solche Federkraft auf, daß zusätzliche Befestigungselemente entfallen. Die Widerhaken verhindern, zumindest erschweren des Abziehen des Klemmverschlusses von dem Deckel. Bevorzugt sind die Widerhaken aus den Schenkeln der Klammer ausgeschnitten und abgewinkelt, erfordern also ebenfalls kein zusätzliches Materiale Werzeuge für das Aufstecken der Klammer sind nicht erforderlich; andererseits kann das Aufstecken maschinell erfolgen, und zwar sowohl als Einzelverschluß als auch von einem in rhythmischer Wiederholung die Verschlüsse enthaltenden bandartigen Verschlußstreifen, von dem sie in wählbarer Länge abgeschnitten — vereinzelt — werden. Nach dem Aufbringen des Befestigungsteils ist die Klammer so positioniert, daß der Schenkel des Klemmteils bei geschlossenem Deckel an dem Kastenteil anliegt und ihn unter Klemmwirkung in Anlage hält. Der als Fangteil ausgebildete Schenkel erleichtert das Fassen des Kastenteils und verbessert die Klemmwirkung. Als Fangteil ist dabei eine Ausbildung bezeichnet, bei der auf ein Endteil leicht vergrößerten Querschnitts oder Abstands für das Einbringen des Kastenteils ein Mittelteil verkleinerten Querschnitts oder Abstands für die Halterung unter Klemmwirkung folgt.

Die Ansichtsflächen dies Klemmverschlusses sind als zier- und/oder Grifflächen ausbildbar. Der Klemmverschluß nach der Erfindung ist bei kastenförmigen Behältern aus allen bekannten Materialien verwendbar, besonders vorteilhaft da, wo Fremdmittel, wie Nägel oder Nieten, oder Eintreibspitzen nicht ausreichen halten, zum Beispiel bei Sperrhölzern, bestimmten Kunststoff arten Pappe mit oder ohne Einlage. Der Klemmverschluß selbst besteht aus Metall, Kunststoff, Plexiglas, Holz oder dergleichen Werkstoff.

Im folgenden wird die Erfindung anhand von lediglich Ausführungswege darstellenden Zeichnungen näher erläutert. Es zeigt:

Fig. 1 etwa in fünffacher Vergrößerung einen Klemmverschluß;

Fig. 2 bis Fig. 11 etwa in zweifacher Vergrößerung Klemmverschlüsse unterschiedlicher Ausgestaltung, wobei jeweils

a) eine Stirnansicht,

b) die Draufsicht,

c) die Vorderansicht und

d) einen Auschnitt durch einen geschlossenen Behälter mit aufgebrachtem Klemmverschluß zeigen.

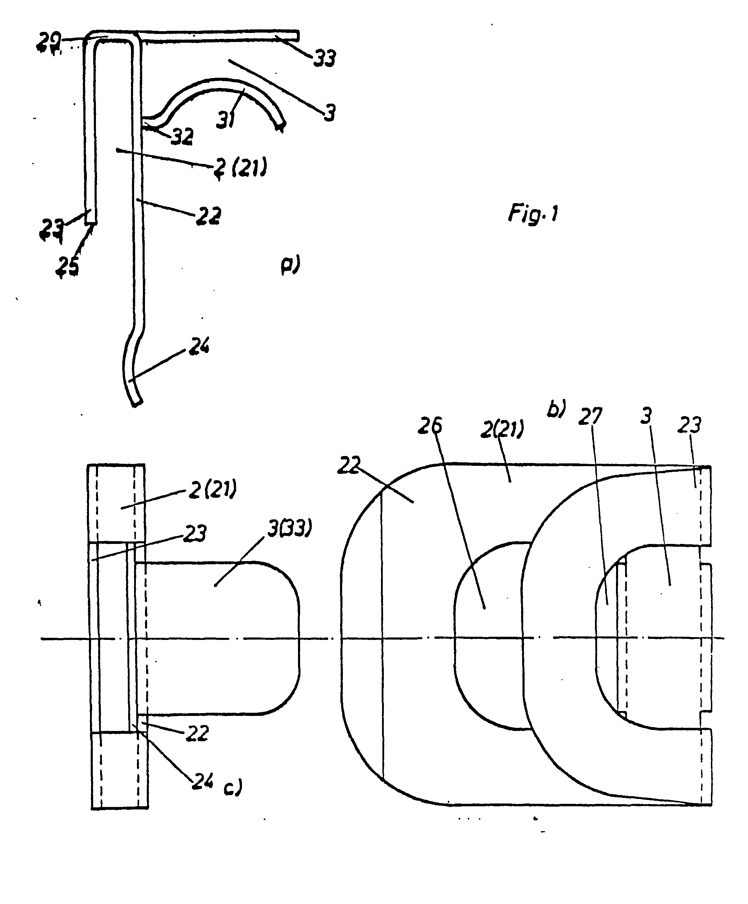

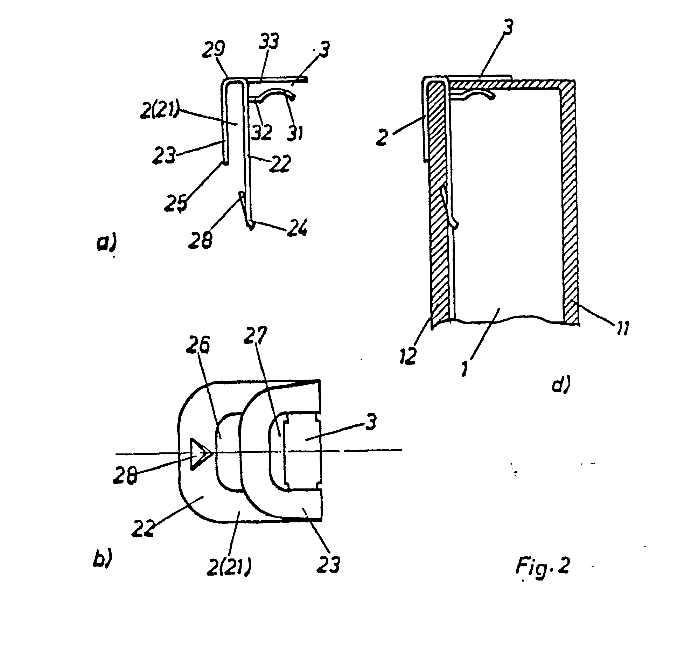

Die bevorzugte Ausführung des Klemmverschlusses ist in den Fig. 1 und 2 dargestellt.

Der Klemmverschluß ist für einen kastenförmigen Behälter 1 vorgesehen. Der kastenförmige Behälter 1 weist einen Kastenteil 11 und einen schwenkbar an dem Kastenteil 11 befestigten Deckel 12 auf. Im Ausführungsbeispiel besteht der Deckel 12 aus einem Flachdeckel. Ein Scharnier, mit dessen Hilfe der Deckel 12 am Kastenteil 11 schenkbar ist, ist nicht dargestellt.

Der Klemmverschluß weist ein an dem Deckel 12 anbringbares Besfestigungsteil 2 auf. Das Befestigungsteil 2 besteht aus einer einen Teil des Randes des Deckels 12 umfassenden Klammer 21. In einer Stirnansicht ist die Klammer 21 im wesentlichen U-förmig ausgebildet. Die Klammer 21 weist einen Schenkel 22 auf, der länger ausgeführt ist als der andere Schenkel 23. Der längere Schenkel 22 ist im Bereich seines freien Endes 24 nach innen ausgebaucht ausgeführt. Die Schenkel 22, 23 der Klammer 21 sind im mittleren Bereich 26, 27 ausgespart. Die Schenkel 22, 23 sind an den freien Enden 24, 25 und im ausgesparten mittleren Bereich 26, 27 abgerundet. Es entstehen so zwei Schenkel 22, 23, die in sich jeweils wieder U-förmig ausgebildet sind. Der längere Schenkel 22 ist auf der dem Deckel 12 zugewandten Seite mit einere Widerhaken 28 versehen. Der Widerhaken 28 ist aus dem längeren Schenkel 22 ausgeschnitten und abgewinkelt. Der Widerhaken könnte auch auf der dem Deckel 12 zugewandten Seite des kürzeren Schenkels 23 vorgesehen sein. Es könnten auch beide Schenkel 22, 23 auf der dem Deckel 12 zugewandten Seite mit jeweils einem Widerhaken versehen sein.

Der Klemmverschluß weist weiterhin ein Klemmteil 3 auf. Das Klemmteil 3 ist mit mindestens einen Schenkel 31 versehen, der im Anschluß an seinen ebenen Schenkelteil 32 konvex von dem Kastenteil 11 weggekrümmt ist. In dem bevorzugten Ausführungsbeispiel nach den Fig. 1 und 2 is das Klemmteil 3 in der Stirnansicht U-förmig ausgebildet. Es weist neben dem Schenkel 31 einen weiteren Schenkel 33 auf. Der Schenkel 33 ist eben ausgeführt. Der Schenkel 31 ist im Anschluß an seinen ebenen parallel zu der Schenkel 33 verlaufenden Schenkelteil 32 nach innen ausgebaucht ausgeführt. Das Klemmteil 3 ist senkrecht zu der Klammer 21 angeordnet. Seine Schenkel 31, 33 entstehen aus den ausgesparten mittleren Bereichen 26, 27 der Schenkel 22, 23 der Klammer 21. Der äußere Schenkel 33 des Klemmteils 3 ist in der Ebene des Rückens 29 der Klammer 21 angeordnet.

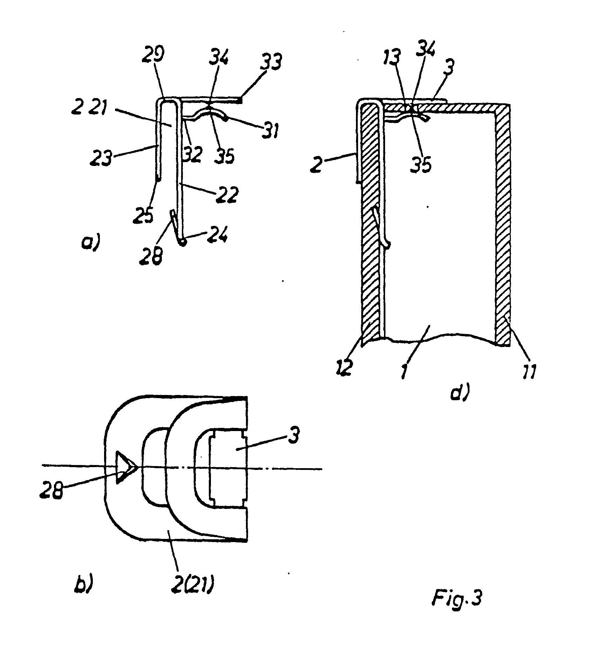

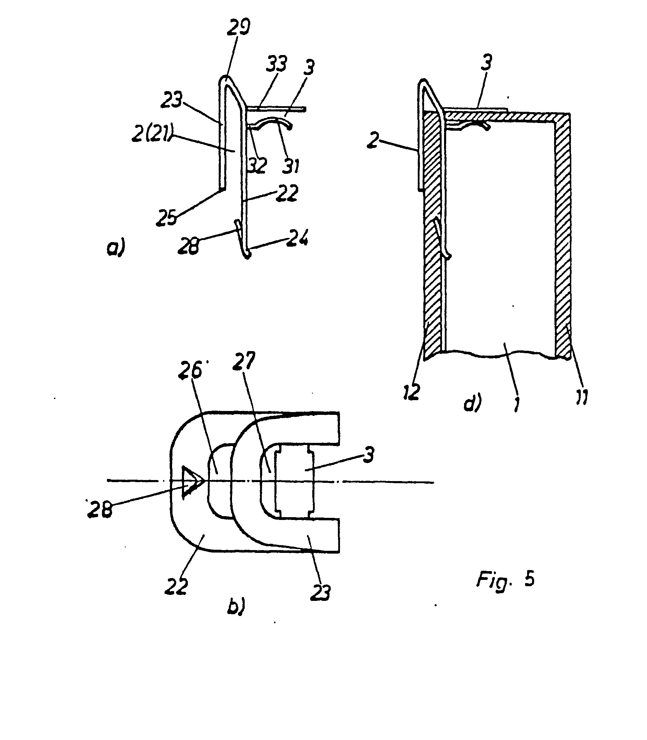

Die in dem Fig. 3 und 5 dargestellten Klemmverschlüsse haben die gleiche Ausgestaltung wie der in den Fig. 1 und 2 dargestellte Klemmverschluß, jedoch mit folgenden ergänzten/geänderten Merkmalen.

Bei dem in Fig. 3 dargestellten Klemmverschluß sind die Schenkel 31, 33 des Klemmteils 3 mit je einer Warze 34, 35 versehen. Bei geschlossenem Behälter greifen die Warzen 34, 35 in eine Öffnung 13 im Kastenteil 11. Auf diese Weise wird die Klemmwirkung des Klemmverschlusses erhöht, also das ungewollte Öffnen des klemmverschlusses erschwert.

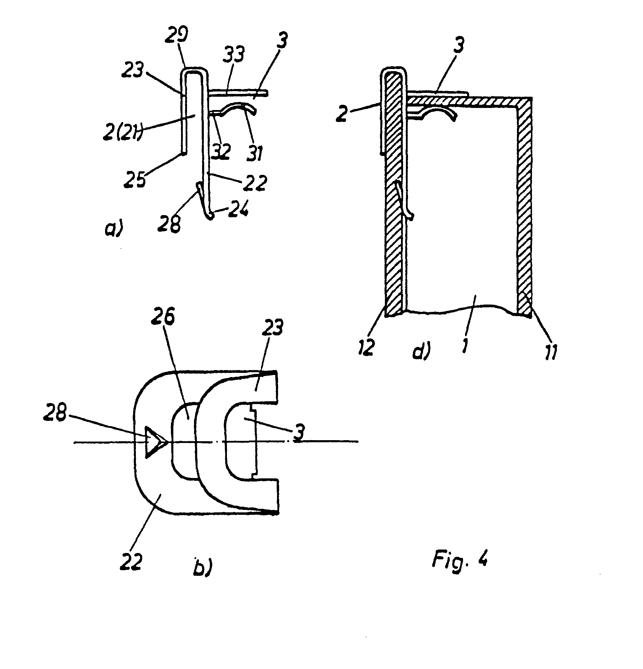

Bei dem in den Fig. 4 und 5 dargestellten Klemmverschlüssen ist der äußere Schenkel 33 des Klemmteils 3 im Abstand von der Rücken 29 an der Klammer 21 angeordnet. Bei der in Fig. 4 dagestellten Ausführung verläuft der Rücken 29 im wesentlichen parallel im Abstand von dem Schenkel 33; bei der in Fig. 5 dargestellten Ausführung verläuft der Rücken 29 angefangen von dem Schenkel 33 schräg nach außen. Der Klemmverschluß nach Fig. 4 ist für einen kastenförmigen Behälter 1 mit einen Deckel 12 in der Form eines überstehenden Flachdeckels vorgesehen; der Klemmverschluß in Fig. 5 für einen ebenen Flachdeckel, bei dem gleichzeitig eine Griffausbildung verlangt ist.

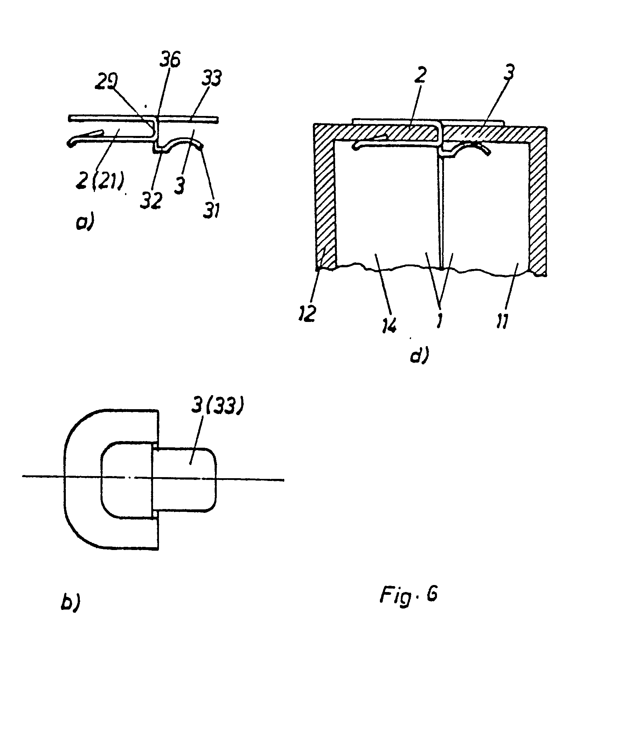

Bei dem in Fig. 6 dargestellten Klemmverschluß ist das Klemmteil 3 in der Ebene der Klammer 21 angeordnet. Der Rücken 29 der Klammer 21 stößt an den Rücken 36 des Klemmteils 3. Diese Ausführung ist gewählt, wenn Kastenteil 11 und Deckel 12 Bestandteile einer Schatulle sind, also eines kastenförmigen Behälters, bei dem auch der Deckel 12 Seitenwände 14 aufweist.

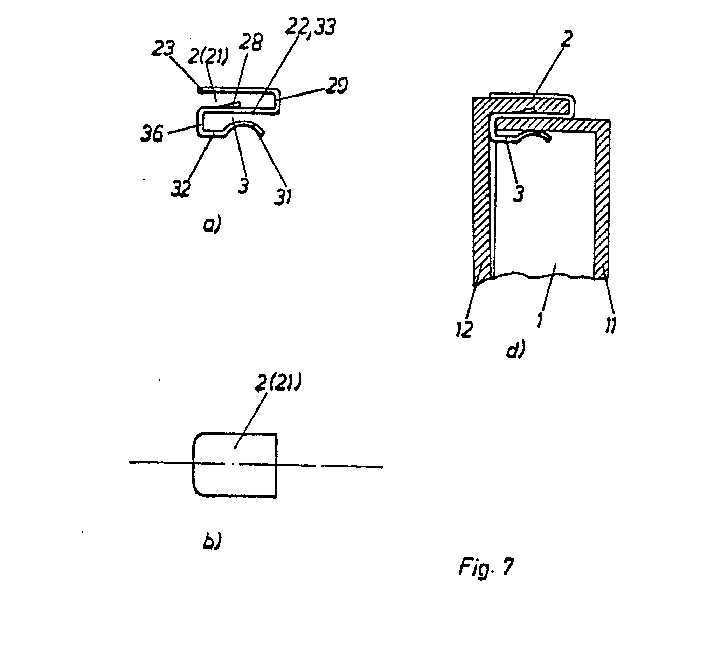

Bei dem in Fig. 7 dargestellten Klemmverschluß ist das Klemmteil 3 in einer Ebene entgegengesetzt parallel zur Ebene der Klammer 21 angeordnet. Einer der Schenkel der Klammer 21, nämlich der Schenkel 22, bildet zugleich einen der Schenkel, nämlich den Schenkel 33, des Klemmteils 3. Keiner der Schenkel 22, 23 weist eine Aussparung auf, wohl aber einen ausgeschnittenen und abgewinkelten Widerhaken 28. Diese Ausführung des Klemmverschlusses ist für einen Stülpkarton vorgesehen, bei dem der Deckel 12 den Kastenteil 11 am Rand übergreift.

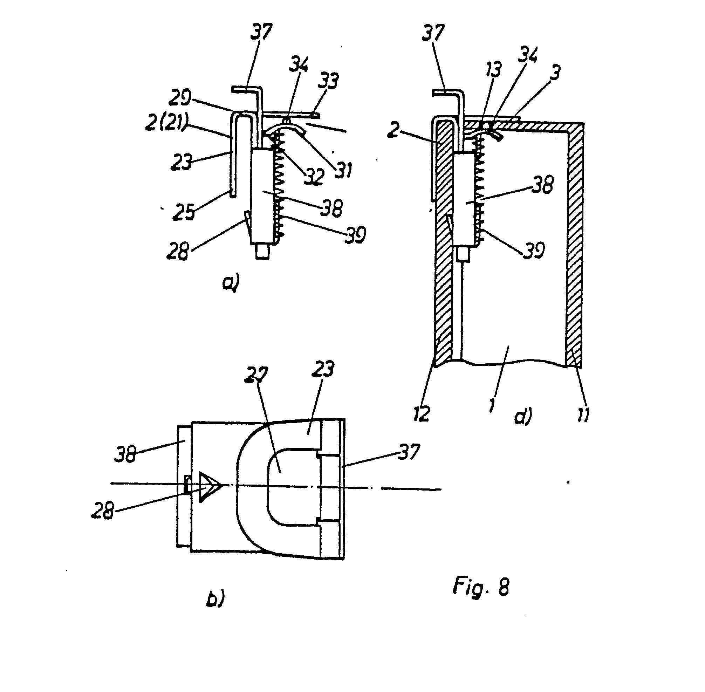

Bei dem in Fig. 8 dargestellten Klemmverschluß ist der innere Schenkel 31 des Klemmteils 3 an einer Haken 37 befestigt. Der Haken 37 ist in einer Führung 38 parallel zu den Schenkeln 22, 23 der Klammer 21 bewegbar. Der Haken 37 ist entgegen dem Deruck einer Feder 39 von außen betätigbar. Auch bei dieser Ausführung weist der Schenkel 31 die Warze 34 für den Eingriff in die Öffnung 13 des Kastenteils 11 auf.

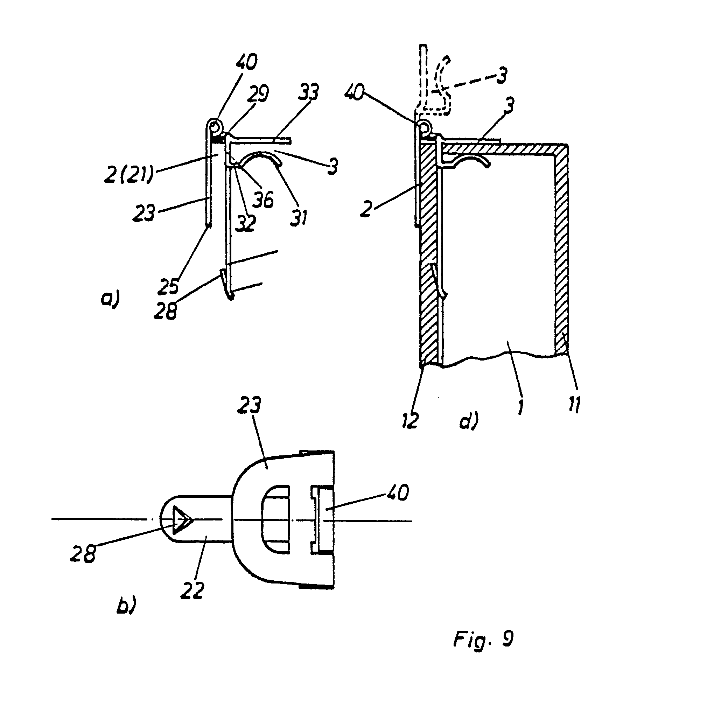

Bei dem in Fig. 9 dargestellten Klemmverschluß sind die Rücken 29, 36 von Klammer 21 und Klemmteil 3 mittels eines Scharniers 40 zusätzlich schwenkbar miteinander verbunden. Der Schenkel 22 ist schlanker ohne Aussparung, jedoch mit Widerhaken 28 ausgeführt.

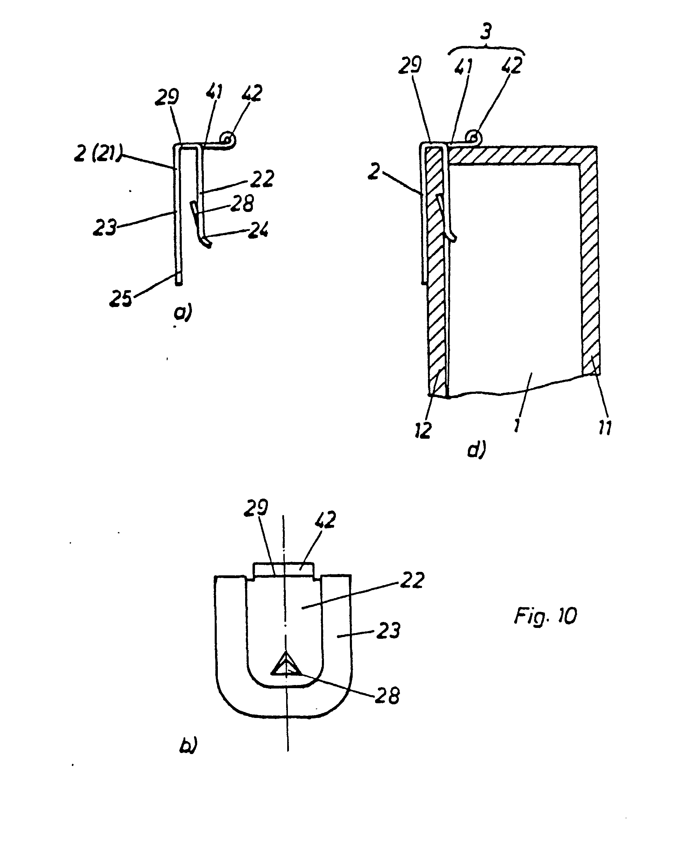

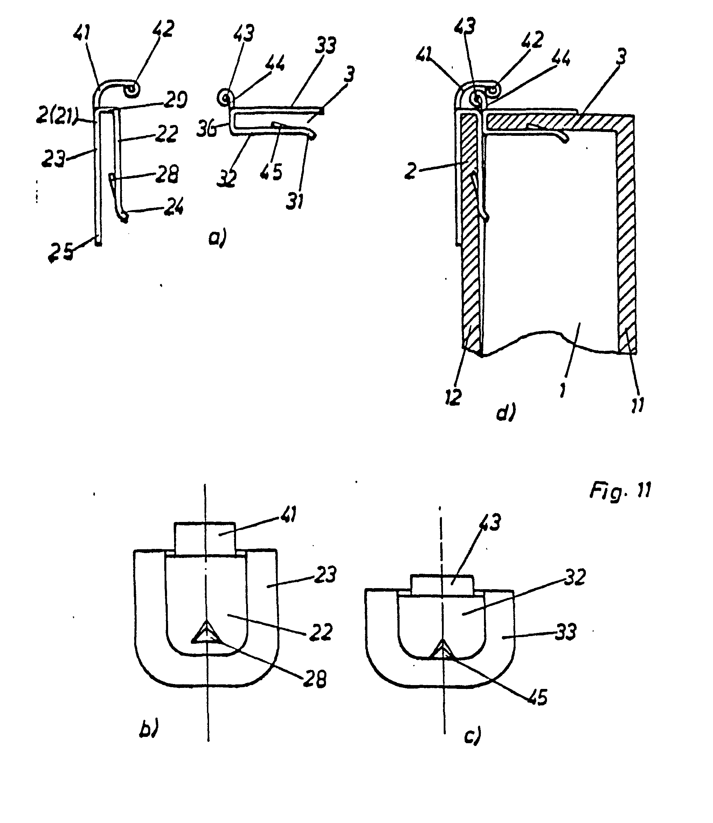

Bei dem in den Fig. 10 und 11 dargestellten Klemmverschluß ist am Rücken 29 der Klammer 21 ein zumindest teilweise bei geschlossenem Deckel 12 in Richtung des Kastenteils 11 verlaufender Steg 41 angeformt, der am freien Ende 42 eingerollt ist. Bei dem in Fig. 10 dargestellten Klemmverschluß ist der Steg 41 in der Verlängerung des Pückens 29 der Klammer 21 angeformt. Der Steg 41 ist mit einer nach außen gerollten freien Ende 42 versehen. Der Steg ist aus dem Schenkel 23 ausgespart; der Schenkel 22 massiv mit Widerhaken 28 ausgeführt. Bei geschlossenem Deckel 12 liegt der Steg 41 einschließlich seines freien Endes 42 am Kastenteil 11 an.

Bei dem in Fig. 11 dargestellten Klemmverschluß ist der Steg 41 in der Verlängerung des Außenschenkels 23 der Klammer 21 angeordnet. Der Steg ist rechtwinklig nach innen abgebogen und mit den bei diesem Ausführungsbeispiel eingerollten freien Ende 42 versehen. Das freie Ende 42 greift hinter ein nach außen gerolltes freies Ende 43 eines Stegs 44, der in der Verlängerung des Rückens 36 des mit dem Kastenteil 11 fest verbundenen Klemmteils 3 angeformt ist. Das Klemmteil 3 ist analog dem Pefestigungsteil in Fig. 10 ausgeführt und mit einem Widerhaken 45 versehen.

Bei dem Ausführung nach Fig. 10 bildet der Klemmverschluß gleichzeigt ein Griffstöck. Bei der Ausführung nach Fig. 11 hat der Klemmverschluß Knebelfunktion: Je ein getrenntes Klemmteil am Deckel 12 und am Kastenteil 11 ergeben im Zusammenwirken der Teil die Funtion eines Knebelverschlusses.

**Patentansprüche**

1. Klemmverschluß für einen kastenförmigen Behälter (1), der einen Kastenteil (11) und einen schwenkbar an dem Kastenteil befestigten Deckel (12) aufweist, mit einem Befestigungsteil (2), der aus einer einen Teil des Randes des Deckels (12) umfassenden Klammer (21) gebildet ist, und mit einem bei geshlossenem Deckel (12) an einem Teil des Randes des Kastenteils (11) anliegenden Klemmteil (3), der mindestens einen Schenkel (31) aufweist, der im Anschluß an seinen ebenen Schenkelteil (32) als Fangteil ausgebildet ist, dadurch gekennzeichnet, daß die den Befestigungsteil (2) bildende Klammer (21) in einer Stirnansicht im wesentlichen U-förmig mit parallelen Schenkeln (22; 23) ausgebildet ist, von denen wenigstens einer auf der dem Deckel (12) zugewändten Seite mit einem Widerhaken (28) versehen ist.

2. Klemmverschluß nach Anspruch 1, dadurch gekennzeichnet, daß die Klammer (21) Schenkel (22, 23) aufweist, von denen einer (22) länger als der andere (23) ausgeführt und im Bereich seines freien Endes (24) nach innen ausgebaucht ist.

3. Klemmverschluß nach Anspruch 2, dadurch gekennzeichnet, daß die Schenkel (22, 23) der Klammer (21) im mittleren Bereich (26, 27) ausgespart sind und jeder ausgesparte Teil (26, 27) zu einem der Schenkel (31, 33) des Klemmteils (3) abgewinkelt ist.

4. Klemmverschluß nach Anspruch 3, dadurch gekennzeichnet, daß die Schenkel (22, 23) der Klammer (21) an den freien Enden (24, 25) und im ausgesparten Bereich (26, 27) abgerundet sind.

5. Klemmverschluß nach Anspruch 1, dadurch gekennzeichnet, daß aus beiden Schenkeln (22; 23) der Klammer (21) Widerhaken (28) ausgeschnitten und abgewinkelt sind.

6. Klemmverschluß nach Anspruch 1, dadurch gekennzeichnet, daß der Widerhaken (28) aus dem Schenkel (22) der Klammer (21) ausgeschnitten und abgewinkelt ist.

7. Klemmverschluß nach Anspruch 6, dadurch gekennzeichnet, daß der Widerhaken (28) aus dem längeren Schenkel (22) ausgeschnitten und abgewinkelt ist.

8. Klemmverschluß nach einem der Ansprüche 1 bis 7 mit einem in der Stirnansicht U-förmigen Klemmteil, dadurch gekennzeichnet, daß das Klemmteil (3) einen Schenkel (31) aufweist, der im Anschluß an seinen ebenen parallel zu dem ebenen anderen Schenkel (33) verlaufenden Teil (32) nach innen ausgebaucht ausgeführt ist.

9. Klemmverschluß nach Anspruch 8, dadurch gekennzeichnet, daß das Klemmteil (3) senkrecht zu der Klammer (21) angeordnet ist.

10. Klemmverschluß nach Anspruch 9, dadurch gekennzeichnet, daß der äußere Schenkel (33) des Klemmteils (3) in der Ebene des Rückens (29) der Klammer (21) angeordnet ist.

11. Klemmverschluß nach Anspruch 9, dadurch gekennzeichnet, daß der äußere Schenkel (33) des Klemmteils (3) im Abstand von der Rücken (29) an der Klammer (21) angeordnet ist.

12. Klemmverschluß nach Anspruch 8, dadurch gekennzeichnet, daß das Klemmteil (3) in der Ebene der Klammer (21) angeordnet ist, wobei Klemmteil (3) und Klammer (21) mit ihren Rücken (29; 36) aneinanderstoßen.

13. Klemmverschluß nach Anspruch 8, dadurch gekennzeichnet, daß das Klemmteil (3) in einer Ebene entgegengesetzt parallel zur Ebene der Klammer (21) angeordnet ist und einer der Schenkel (22) der Flammer (21) zugleich einen der Schenkel (33) des Klemmteils (3) bildet.

14. Klemmverschluß nach Anspruch 9 oder 10, dadurch gekennzeichnet, daß der innere Schenkel (31) des Klemmteils (3) ain einem Haken (37) befestigt ist, der in einer Führung (38) parallel zu dem Schenkel (22) der Klammer (21) bewegbar und entgegen dem Druck einer Feder (39) von außen betätigbar ist.

15. Klemmverschluß nach einem der Ansprüche 8 bis 14, dadurch gekennzeichnet, daß wenigstens einer der Schenkel (31, 33) des Klemmteils (3) mit einer Warze (34, 35) versehen ist, die bei geschlossener Behälter (1) in eine Öffnung (13) im Kastenteil (11) eingreift.

16. Klemmverschluß nach Anspruch 8, dadurch gekennzeichnet, daß das Klemmteil (3) mit seinem Rücken (36) am Rücken (29) der Klammer (21) mittels eines Scharniers (40) schwenkbar befestigt ist.

17. Klemmverschluß nach einem der Ansprüche 1 bis 16, dadurch gekennzeichnet, daß am Rücken (29) der Klammer (21) ein zumindest teilweise bei geschlossenem Deckel (12) in Richtung des Kastenteils (11) verlaufender Steg (41) angeformt ist, der am freien Ende (42) eingerollt ist.

18. Klemmverschluß nach Anspruch 17, dadurch gekennzeichnet, daß der Steg (41) in der Verlängerung des Rückens (29) der Klammer (21) angeformt, mit einem nach außen gerollten freien Ende (42) versehen ist und bei geschlossenem Deckel (21) am Kastenteil (11) anliegt.

19. Klemmverschluß nach Anspruch 17, dadurch gekennzeichnet, daß der Steg (41) in der Verlängerung des Außenschenkels 23) der Klammer (21) angeordnet, rechtwinklig nach innen abgebogen und mit einer nach innen eingerollten freien Ende (42) versehen ist, das hinter ein nach außen gerolltes freies Ende (43) eines Stegs (44) greift, derr in der Verlängerung des Rückens (36) des mit dem Kastenteil (11) fest verbundenen Klemmteils (3) angeformt ist.

20. Klemmverschluß nach Anspruch 19, dadurch gekennzeichnet, daß einer der Schenkel (32, 33) des Klemmteils (3) auf der dem Kastenteil (11) zugewandten Seite mit einem Widerhaken (45) versehen ist.

21. Klemmverschluß nach einem der Ansprüche 1 bis 20, dadurch gekennzeichnet, daß der als Fangteil ausgebildete Schenkel (31) konvex von dem Kastenteil (11) weggekrümmt ist.

**Revendications**

1. Fermeture à serrage pour un récipient (1) en forme de caisse avec un élément de caisse (11) et ou couvercle (12) fixé de manière pivotante sur l'élément de caisse, comprenant un élément de fixation (2) constitué par une agrafe (21) entourant une partie du bord du courvercle (12) et un élément de serrage (3) qui, lorsque le couvercle (12) est fermé, est appliqué contre une partie de l'élément de caisse (11) et comporte au moins une branche (31) laquelle est conformée, à la suite de sa section de branche plane (32), en élément d'arrêt, caractérisée en ce que l'agrafe (21) formant l'élément de fixation (2) présente, en vue frontale, une conformation sensiblement en U, avec des branches parallèles (22, 23) dont au moins l'une est munie d'une barbe (28) du côté dirigé vers le couvercle (12).

2. Fermeture à serrage selon la revendication 1, caractérisée en ce que l'agrafe (21) comprend des branches (22, 23) dont l'une (22) est plus longue que l'autre (23) et évasée vers l'intérieur dans la région de son extrémité libre (24).

3. Fermeture à serrage selon la revendication 2, caractérisée en ce que les branches (22, 23) de l'agrafe (21) sont évidées dans la zone médians (26, 27) et que chaque partie évidée (26, 27) est coudée pour former l'une des branches (31, 33) de l'élément de serrage (3).

4. Fermeture à serrage selon la revendication 3, caractérisée en ce que les branches (22, 23) de l'agrafe (21) sont arrondies aux extrémités libres (24, 25) et dans la zone évidée (26, 27).

5. Fermeture à serrage selon la revendication 1, caractérisée en ce que des barbes (28) sont découpées et coupées dans les deux branches (22, 23) de l'agrafe (21).

6. Fermeture à serrage selon la revendication 1, caractérisée en ce que la barbe (28) est découpée et coudée dans la branche (22) de l'agrafe (21).

7. Fermeture à serrage selon la revendication 6, caractérisée en ce que la barbe (28) est découpée et coudée dans la branche plus longue (22).

8. Fermeture à serrage selon l'une des revendications 1 à 7, avec un élément de serrage conformé en U dans la vue frontale, caractérisée en ce que l'élément de serrage (3) comprend une branche (31) qui, à la suite de sa section (32) plane et parallèle à l'autre branche plane (33), est évasée vers l'intérieur.

9. Fermeture à serrage selon la revendication 8, caractérisée en ce que l'élément de serrage (3) est disposé perpendiculairement à l'agrafe (21).

10. Fermeture à serrage selon la revendication 9, caractérisée en ce que la branche extérieure (33) de l'élément de serrage (3) est disposée dans le plan du dos (29) de l'agrafe (21).

11. Fermeture à serrage selon la revendication 9, caractérisée en ce que la branche extérieure (33) de l'agrafe (3) est disposée à distance du dos (29) sur l'agrafe (21).

12. Fermeture à serrage selon la revendication 8, caractérisée en ce que l'élément de serrage (3) est disposé dans le plan de l'agrafe (21), l'élément de serrage (3) et l'agrafe (21) se touchant par leurs dos (29, 36).

13. Fermeture à serrage selon la revendication 8, caractérisée en ce que l'élément de serrage (3) est disposé dans un pan parallèle en sens inverse au plan de l'agrafe (21), et que l'une des branches (22) de l'agrafe (21) forme en même temps l'une des branches (33) de l'élément de serrage (3).

14. Fermeture à serrage selon l'une des revendications 9 ou 10, caractérisée en ce que la branche intérieure (31) de l'élément de serrage (3) est fixée sur un crochet (37) lequel peut être déplacé dans un guidage (38), parallèlement à la branche (22) de l'agrafe (21), et actionné par l'extérieur contre la pression d'un ressort (39).

15. Fermeture à serrage selon l'une des revendications 8 à 14, caractérisée en ce qu'au moins l'une des branches (31, 33) de l'élément de serrage (3) est munie d'un bossage (34, 35) qui s'engage dans une ouverture (13) dans l'élément de caisse (11) lorsque le récipient (1) est fermé.

16. Fermeture à serrage selon la revendication 8, caractérisée en ce que l'élément de serrage (3) est fixé avec son dos (36) de manière pivotante sur le dos (29) de l'agrafe (21) au moyen d'une charnière (40).

17. Fermeture à serrage selon l'une des revendications 1 à 16, caractérisée en ce qu'au dos (29) de l'agrafe (21) est conformée une bartrette (41) qui, lorsque le couvercle (12) est fermé, s'étend au moins partiellement dans la direction de l'élément de caisse (11) et dont l'extrémité libre (42) est enroulée.

18. Fermeture à serrage selon la revendication 17, caractérisée en ce que la barrette (41) est conformée dans le prolongement du dos (29) de l'agrafe (21), munie d'une extrémité libre (42) enroulée vers l'extérieur et appliquée contre l'élément de caisse (11) lorsque le couvercle (12) est fermé.

19. Fermeture à serrage selon la revendication 17, caractérisée en ce que la barrette (41) est disposée dans le prolongement de la branche extérieure (23) de l'agrafe (21), pliée à angle droit vers l'intérieure et munie d'une extrémité libre (42) roulée vers l'intérieur et munie d'une extrémité libre (42) roulée vers l'intérieur laquelle passe derrière une extrémité libre (43) d'une barrette (44) roulée vers l'extérieur et conformée dans le prolongement du dos (36) de l'élément de serrage (3) solidaire de l'élément de caisse (11).

20. Fermeture à serrage selon la revendication 19, caractérisée en ce que l'une branches (32, 33) de l'élément de serrage (3) est munie d'une barbe (45) du côté dirigé vers l'élément de caisse (11).

21. Fermeture à serrage selon l'une des revendications 1 à 20, caractérisée en ce que la branche (31) conformée en élément d'arrêt présente une courbure convexe par rapport à l'élément de caisse (11).

**Claims**

1. Clamping closure for a box-type container (1), which has a box part (11) and a lid (12) fastened in a hinged manner on the box part, having a fastening element (2) formed by a clasp (21) which embraces a part of the edge of the lid (12) and having a clamping element (3) which is adjacent to a part of the edge of the box part (11) when the lid (12) is closed and has at least one leg (31) constructed at the junction with its flat leg part (32) as a catch element, characterised in that the clasp (21) forming the fastening element (2) viewed from the front is basically U-shaped with parallel limbs (22, 23) of which at least one is provided with a barb (28) on its side facing the lid (12).

2. Clamping closure according to claim 1, characterised in that the clasp (21) has limbs (22, 23) of which one (22) is longer than the other (23) and bulges inwards in the region of its free end (24).

3. Clamping closure according to claim 2, characterised in that the limbs (22, 23) of the clasp (21) are left open in the central region (26, 27) and each recessed part (26, 27) forms an angle relative to one of the legs (31, 33) of the clamping element (3).

4. Clamping closure according to claim 3, characterised in that the limbs (22, 23) of the clasp (21) are rounded at their free ends (24, 25) and in the recessed region (26, 27).

5. Clamping closure according to claim 1, characterised in that barbs (28) are cut out and angled from both limbs (22, 23) of the clasp (21).

6. Clamping closure according to claim 1, characterised in that the barb (28) is cut out and angled from the limb (22) of the clasp (21).

7. Clamping closure according to claim 6, characterised in that the barb (28) is cut out and angled from the longer limb (22).

8. Clamping closure according to one of claims 1 to 7 having a clamping element which is U-shaped when viewed from the front, characterised in that the clamping eement (3) has a leg (31) which bulges inward at the junction with its flat part (32) extending parallel to the other flat leg (33).

9. Clamping closure according to claim 8, characterised in that the clamping element (3) is disposed at right angles to the clasp (21).

10. Clamping closure according to claim 9, characterised in that the outer leg (33) of the clamping element (3) is disposed in the plane of the back (29) of the clasp (21).

11. Clamping closure according to claim 9, characterised in that the outer leg (33) of the clamping element (3) is disposed at a distance from the back (29) on the clasp (21).

12. Clamping closure according to claim 8, characterised in that clamping element (3) is disposed in the plane of the clasp (21), with the backs (29; 36) of the clamping element (3) and the clasp (21) abutting.

13. Clamping closure according to claim 8, characterised in that the clamping element (3) is disposed in a plane opposite and parallel to the plane of the clasp (21) and one of the limbs (22) of the clasp (21) simultaneously forms one of the legs (33) of the clamping element (3).

14. Clamping closure according to claim 9 or 10, characterised in that the inner leg (31) of the clamping element (3) is mounted on a hook (37) which is movable in a guideway (38) parallel to the limb (22) of the clasp (21) and is externally actuable against the pressure of a spring (39).

15. Clamping closure according to one of claims 8 to 14, characterised in that at least one of the legs (31, 33) of the clamping element (3) is provided with a boss (34, 35) which engages in an opening (13) in the box part (11) when the container (1) is closed.

16. Clamping closure according to claim 8, characterised in that the clamping element (3) is mounted with its back (36) against the back (29) of the clasp (21) so as to be able to swivel by means of a hinge (40).

17. Clamping closure according to one of claims 1 to 16, characterised in that a web (41), which extends at least partially towards the box part (11) when the lid (12) is closed and is bent round at its free end (42), is formed on the back (29) of the clasp (21).

18. Clamping closure according to claim 17, characterised in that the web (41) formed in the extension of the back (29) of the clasp (21) is provided with an outwardly rolled free end (42) and lies adjacent to the box part (11) when the lid (12) is closed.

19. Clamping closure according to claim 17, characterised in that the web (41) disposed in the extension of the outer limb (23) of the clasp (21) is bent inwards at right angles and is provided with an inwardly rolled free end (42), which engages behind an outwardly rolled free end (43) of a web (44) formed in the extension of the back (36) of the clamping element (3) which is firmly connected to the box part (11).

20. Clamping closure according to claim 19, characterised in that one of the legs (32, 33) of the clamping element (3) is provided with a barb (45) on its side facing the box part (11).

21. Clamping closure according to one of claims 1 to 20, characterised in that the leg (31) in the form of a catch element is curved in a convex manner out from the box part (11).

Fig. 1

a)

b)

c)

Fig. 2

Fig. 3

Fig. 4

Fig. 5

29 36 33

2(21) 32 3 31

a)

3(33)

b)

2 3

12 14 1 11

d)

Fig. 6

a)

b)

d)

*Fig. 7*

a)

b)

d)

Fig. 8

8

Fig. 9

Fig. 10

Fig. 11